# EUROPÄISCHE PATENTSCHRIFT

(11) **EP 0 601 433 B1**
(45) Veröffentlichungstag und Bekanntmachung des Hinweises auf die Patenterteilung: **17.01.1996**
(21) Anmeldenummer: 93119215.7
(22) Anmeldetag: 29.11.1993
(51) Int. Cl.: H02K 7/116, H02K 5/16

(54) **Antriebsaggregat**
Drive unit
Equipement moteur

(30) Priorität: 10.12.1992 DE 9216772 U
(43) Veröffentlichungstag der Anmeldung: 15.06.1994
(73) Patentinhaber: SIEMENS AKTIENGESELLSCHAFT, D-80333 München (DE)
(72) Erfinder: Büttel, Matthias, Dipl.-Ing. FH, D-90408 Nürnberg (DE)

(56) Entgegenhaltungen:
- DE-A- 2 827 722
- DE-U- 9 115 647

## Beschreibung

Die Erfindung betrifft ein Antriebsaggregat gemäß dem Oberbegriff des Anspruchs 1.

Ein derartiges Antriebsaggregat mit einem Antriebsmotor ist durch das DE-U-91 15 647 bekannt. Bei dem Antriebsmotor liegt das Ritzel innerhalb der Lagerung des Motors. Das entsprechende Lager ist hierzu auf der dem hohl ausgebildeten Wellenende abgewandten Seite des Ritzels auf einem mit diesem verbundenen Wellenstummel angeordnet und in die Lagerbohrung eines Lagerschildes, das über ein Endschild mit dem Motorgehäuse verbunden ist, eingesetzt. Eine derartige konstruktive Gestaltung der Abtriebsseite des Antriebsmotors umfaßt Endschild und Lagerschild und ist somit relativ aufwendig, da das Endschild mit einem Anbauflansch für einen Getriebekasten versehen sein muß.

Aufgabe der vorliegenden Erfindung ist es deshalb, ein Antriebsaggregat für Schienenfahrzeuge zu schaffen, das konstruktiv einfacher aufgebaut ist sowie eine einfachere Fertigung und Montage ermöglicht.

Die Aufgabe wird erfindungsgemäß durch die im kennzeichnenden Teil des Anspruchs 1 angegebenen Merkmale gelöst. Vorteilhafte Ausgestaltungen der Erfindung sind in den Ansprüchen 2 bis 7 beschrieben.

Das erfindungsgemäße Antriebsaggregat ist konstruktiv einfacher aufgebaut, da auf der Abtriebsseite des Antriebsmotors anstelle des Endschildes und des Lagerschildes ein direkt am Motorgehäuse befestigter Getriebekasten vorgesehen ist, in dem die Lagerbohrung für die Aufnahme des abtriebsseitigen Lagers angeordnet ist. Durch den konstruktiv einfachen Aufbau des Antriebsaggregates ergibt sich eine einfachere Fertigung und Montage.

Bei einem Antriebsaggregat nach den Ansprüchen 1 bis 4 übernimmt der Getriebekasten in vorteilhafter Weise nicht nur eine Schutzfunktion, sondern er übernimmt für das abtriebsseitige Lager des Antriebsmotors auch die Funktion von tragenden Teilen. Bei einem Antriebsaggregat gemäß den Ansprüchen 5 bis 7 übernimmt der Getriebekasten außerdem für die Lagerung des Großrades die Funktion von tragenden Teilen, so daß ein separates Teil zur Aufnahme des Großrades entfällt.

Weitere Vorteile und Einzelheiten der Erfindung ergeben sich aus der nachfolgenden Beschreibung eines Ausführungsbeispieles anhand der Zeichnung und in Verbindung mit den Ansprüchen 2 bis 7. Es zeigen:
- FIG 1: ein Antriebsaggregat in einem Teil-Längsschnitt,
- FIG 2: eine Stirnansicht des Antriebsaggregates gemäß FIG 1

Mit 1 ist der Läufer eines elektrischen Antriebsmotors bezeichnet, der eine Welle 2 und ein auf dieser angeordnetes Läuferblechpaket 3 aufweist. Ein Ständer 4 umgibt den Läufer 1 unter Belassung eines Luftspaltes 5. Die Welle 2 ist an ihrem abtriebsseitigen Ende 6 hohl ausgebildet. In dieses hohl ausgebildete Wellenende 6 ist der Achsansatz 7 eines Ritzels 8 unter Preßsitz eingefügt. Hierdurch ist eine starre und stabile Verbindung zwischen der Welle 2 und dem Ritzel 8 gegeben. Auf der dem Wellenende 6 abgewandten Seite 9 des Ritzels 8 ist ein Wellenstummel 10 an dem Ritzel 8 angeformt. Auf diesem Wellenstummel 10 ist ein Wälzlager 11 angeordnet. Dieses Wälzlager 11 ist in eine Lagerbohrung 12 eingesetzt, welche in einem Getriebekasten 13 angeordnet ist. Der Getriebekasten 13 besteht aus einem ersten Getriebekastenteil 14 sowie aus einem zweiten Getriebekastenteil 15, die an ihrer vertikalen Trennfuge 16 miteinander verbunden sind. Das erste Getriebekastenteil 14 ist direkt am Motorgehäuse 17 befestigt. Im zweiten Getriebekastenteil 15 ist die Lagerbohrung 12 für das Wälzlager 11 angeordnet.

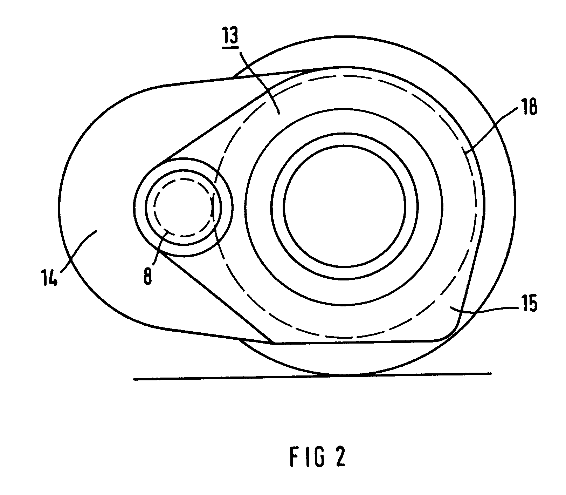

In FIG 2 ist das Motorgehäuse 17 selbst nicht sichtbar, da es hinter dem Getriebekasten 13 angeordnet ist. In dem ersten Getriebekastenteil 14 des Getriebekastens 13 befindet sich ein mit dem Ritzel 8 in Eingriff stehendes Großrad 18.

Um das in dem Getriebekasten 13 befindliche Öl, das auch zur Schmierung des Wälzlagers 11 dient, von dem Innenraum 19 des Antriebsmotors fernzuhalten, ist zwischen dem im Getriebekasten 13 untergebrachten Ritzel 8 und dem Motorinnenraum 19 eine Trennwand 20 vorgesehen, die eine Durchführöffnung 21 für die Welle 2 aufweist. In der Durchführöffnung 21 sitzt eine Labyrinthdichtung 22. Im Bereich der Labyrinthdichtung 22 ist auf das Wellenende 6 ein Ring 23 aufgeschrumpft, der gegenüber dem Material der Labyrinthdichtung 22 Notlaufeigenschaften besitzt. Die radiale Erstreckung der Dichtspalte 24 der Labyrinthdichtung 22 ist kleiner bemessen als die radiale Erstreckung des Luftspaltes 5 zwischen Läufer 1 und Ständer 4 des Motors. Bei einem Schaden an dem Wälzlager 11 wird daher über die Labyrinthdichtung 22 und den Ring 23 ein Notauslauf des Läufers 1 ermöglicht.

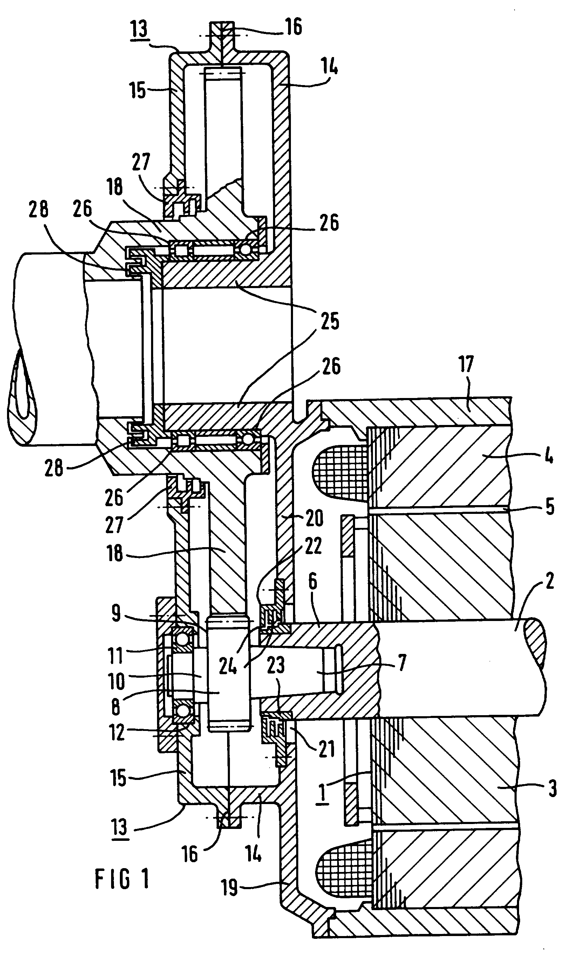

Der Getriebekasten 13 des in FIG 1 dargestellten Antriebsaggregates ist zur Lagerung eines Großrades 18 ausgebildet. Zur Lagerung des Großrades 18 ist im vorliegenden Ausführungsbeispiel ein Lagertopf 25 vorgesehen, der am ersten Getriebekastenteil 14 angeformt ist. Das Großrad 18 ist hierzu mittels Wälzlager 26 im Lagertopf 25 gelagert. Um Ölaustritt aus dem Getriebekasten 13 zu verhindern, sind an der Abtriebsseite des Großrades 18 Labyrinthdichtungen 27 und 28 vorgesehen. Die Labyrinthdichtungen 27 sind hierbei an dem zweiten Getriebekastenteil 15 und die Labyrinthdichtungen 28 an dem ersten Getriebekastenteil 14 angeordnet.

## Patentansprüche

1. Antriebsaggregat mit einem Antriebsmotor, dessen Welle (2) am abtriebsseitigen Ende mittels eines Lagers (11) gelagert und hohl ausgebildet ist, wobei ein mit einem Achsansatz (7) versehenes Ritzel (8) mittels des in das hohl ausgebildete Wellenende (6) eingeführten Achsansatzes (7) mit der Welle (2) drehfest verbunden ist und wobei das Lager (11) auf der dem hohl ausgebildeten Wellenende (6) abgewandten Seite (9) des Ritzels (8) auf einem mit diesem verbundenen Wellenstummel (10) angeordnet ist,
**dadurch gekennzeichnet**,
daß am abtriebsseitigen Ende des Antriebsmotors ein Getriebekasten (13) mit einer Lagerbohrung (12), in die das Lager (11) eingesetzt ist, direkt am Motorgehäuse (17) befestigt ist.

2. Antriebsaggregat nach Anspruch 1,
**dadurch gekennzeichnet**,
daß der Getriebekasten (13) mehrteilig ausgebildet ist.

3. Antriebsaggregat nach Anspruch 1 oder 2,
**dadurch gekennzeichnet,**
daß der Getriebekasten (13) zweiteilig ausgebildet ist, wobei beide Getriebekastenteile (14,15) an ihrer vertikalen Trennfuge (16) miteinander verbunden sind und das erste Getriebekastenteil (14) direkt am Motorgehäuse (17) befestigt ist.

4. Antriebsaggregat nach Anspruch 3,
**dadurch gekennzeichnet,**
daß die Lagerbohrung (12) im zweiten Getriebekastenteil (15) angeordnet ist.

5. Antriebsaggregat nach einem der Ansprüche 1-4,
**dadurch gekennzeichnet,**
daß der Getriebekasten (13) zur Lagerung des Großrades (18) ausgebildet ist.

6. Antriebsaggregat nach Anspruch 5,
**dadurch gekennzeichnet,**
daß die Lagerung des Großrades (18) im ersten Getriebekastenteil (14) angeordnet ist.

7. Antriebsaggregat nach Anspruch 6,
**dadurch gekennzeichnet,**
daß am ersten Getriebekastenteil (14) ein Lagertopf (25) zur Aufnahme der Lagerung des Großrades (18) vorgesehen ist.

## Claims

1. Drive unit having a drive motor, the shaft (2) of which is mounted on the drive end by means of a bearing (11) and is constructed to be hollow, whereby a pinion (8) provided with an axle attachment (7) is connected in a rotationally secure manner to the shaft (2) by means of the axle attachment (7) inserted into the shaft end (6) constructed to be hollow and whereby the bearing (11) on the side (9) of the pinion (8) directed away from the shaft end (6) constructed to be hollow is arranged on a shaft stub (10) connected to the pinion, characterized in that on the drive end of the drive motor a gearbox (13) is fastened directly to the motor housing (17) and it has a bearing bore (12) into which the bearing (11) is inserted.

2. Drive unit according to claim 1, characterized in that the gearbox (13) is constructed in several parts.

3. Drive unit according to claim 1 or 2, characterized in that the gearbox (13) is constructed in two parts, whereby both gearbox parts (14, 15) are connected to each other at their vertical plane of separation (16) and the first gearbox part (14) is fastened directly to the motor housing (17).

4. Drive unit according to claim 3, characterized in that the bearing bore (12) is arranged in the second gearbox part (15).

5. Drive unit according to one of claims 1 to 4, characterized in that the gearbox (13) is constructed for the bearing of the wheel (18).

6. Drive unit according to claim 5, characterized in that the bearing of the wheel (18) is arranged in the first gearbox part (14).

7. Drive unit according to claim 6, characterized in that a bearing container (25) to incorporate the bearing of the wheel (18) is provided on the first gearbox part (14).

## Revendications

1. Unité d'entraînement comportant un moteur d'entraînement, dont l'arbre (2) est tourillonné au moyen d'un palier (11) à l'extrémité du côté mené et est creux, un pignon (8) pourvu d'un embout axial (7) étant rendu solidaire en rotation de l'arbre (2) au moyen de l'embout axial (7) inséré dans l'extrémité creuse (6) de l'arbre, le palier (11) étant, du côté (9) du pignon (8) opposé à l'extrémité creuse (6) de l'arbre, monté sur un bout d'arbre (10) relié à ce pignon, caractérisée par le fait
qu'à l'extrémité du côté mené du moteur d'entraînement, une boîte d'engrenages (13) comportant un perçage de palier (12), dans lequel est inséré un palier (11), est fixée directement sur la carcasse (17) du moteur.

2. Unité d'entraînement suivant la revendication 1, caractérisée par le fait que la boîte d'engrenages (13) est réalisée en plusieurs parties.

3. Unité d'entraînement suivant la revendication 1 ou 2, caractérisée par le fait que la boîte d'engrenages (13) est en deux parties, les deux parties (14,15) de la boîte d'engrenages étant reliées entre elles à leur joint de séparation (16) vertical, et la première partie (14) de la boîte d'engrenages est fixé directement à la carcasse (17) du moteur.

4. Unité d'entraînement suivant la revendication 3, caractérisée par le fait que le perçage (12) du palier est aménagé dans la seconde partie (15) de la boîte d'engrenages.

5. Unité d'entraînement suivant l'une des revendications 1 à 4, caractérisée par le fait que la boîte d'engrenages (13) est agencée pour servir de palier à la roue (18).

6. Unité d'entraînement suivant la revendication 5, caractérisée par le fait que le palier de la roue (18) est disposé dans la première partie (14) de la boîte d'engrenages.

7. Unité d'entraînement suivant la revendication 6, caractérisée par le fait qu'une tête de palier (25) servant à recevoir le palier de la roue (18) est prévue sur la première partie (14) de la boîte d'engrenages.
